# EUROPÄISCHE PATENTSCHRIFT

(11) **EP 0 884 149 B1**
(45) Veröffentlichungstag und Bekanntmachung des Hinweises auf die Patenterteilung: **22.03.2006**
(21) Anmeldenummer: 98113739.1
(22) Anmeldetag: 22.09.1993
(51) Int. Cl.: B27K 3/34, B27K 3/50, A01N 43/653, A01N 25/02

(54) **Mikrobizide Mittel**
Microbicidal agents
Agents microbicides

(30) Priorität: 05.10.1992 DE 4233337
(43) Veröffentlichungstag der Anmeldung: 16.12.1998
(62) Teilanmeldung aus: 93115261.5
(73) Patentinhaber: LANXESS Deutschland GmbH, 51369 Leverkusen (DE)
(72) Erfinder: Heuer, Lutz, Dr., 51542 Dormagen (DE); Wachtler, Peter, Dr., 51061 Köln (DE); Schwamborn, Michael, Dr., 51069 Köln (DE); Kugler, Martin, Dr., 42799 Leichlingen (DE); Buschhaus, Hans-Ulrich, Dr., 47800 Krefeld (DE)

(56) Entgegenhaltungen:
- EP-A- 0 148 526
- EP-A- 0 336 186
- EP-A- 0 478 195
- EP-A- 0 484 279
- EP-A- 0 531 837
- EP-A- 0 554 833
- EP-A- 0 555 186
- WO-A-94/05636
- DE-A- 3 406 993
- NL-A- 8 701 282
- US-A- 4 542 146
- US-A- 4 994 480

## Beschreibung

Die Anmeldung betrifft die Verwendung Synergistisch wirksamer Mischungen enthalten die Verbindung α-(4-Chlorphenyl-α-(1-cyclopropyl-ethyl)-1H-1,2,4-triazol-1-ethanol (Cyproconazole) sowie bestimmte Kapferverbindungen als Mikrobizid zum Schutz von technischen Materialien sowie synergistische Mischungen enthaltend diese Verbindungen.

Aus DE-A 34 06 993 sind Azolderivate bekannt, die als Metallkomplexe, z.B. mit Kupfer als Metallion vorliegen können, und die in Form von Formulierungen und gegebenenfalls in Gegenwart weiterer Fungizide zur Bekämpfung von phytopathogenen Fungi geeignet sind.

Aus EP-A 484279 sind pflanzenfungizide Zweikomponenten-Mittel aus Cyproconazol und Fenpropimorph und/oder Fenpropidin bekannt. Cyproconazol kann dabei auch in Form von Metallkomplexen, z.B. als Kupfer-Komplex vorliegen.

Gegenstand der vorliegenden Anmeldung ist die Verwendung einer synergistisch wirksamen Mischung enthaltend Cyproconazole der Formel (I) 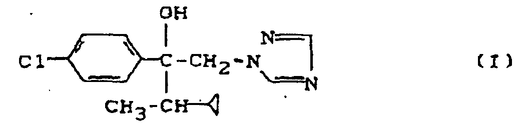 dessen Metallsalze oder Säureadditions verbindungen,
und eine Kupferverbindung aus der Reihe Kupfernaphthenat, -octoat, -2-ethylhexanoat, -oleat, -phosphat, -benzoat, Cu₂O, CuO, CuSO₄, CuCl₂, Kupferborate, Kupferfluorsilikate, Kupferhydroxycarbonat als Mikrobizid zum Schutz von technischen Materialien gegen im materialschutz relevante Mikroorganismen.

Das Azolderivat (I) kann nicht nur in Form der freien Base sondern auch in Form eines Metallsalz-Komplexes oder als Säureadctitions-Salz vorliegen. Als Metallsalz kommen vorzugsweise Salze von Metallen der II. bis IV. Hauptgruppe und der I. und II. sowie IV. bis VII. Nebengruppe des Periodensystems in Frage, wobei Kupfer, Zink, Mangan, Magnesium, Zinn, Eisen, Calcium, Aluminium, Blei, Chrom, Kobalt und Nickel, beispielhaft genannt seien.

Als Anionen der Salze kommen solche in Betracht, die sich vorzugsweise von folgenden Säuren ableiten: Halogenwasserstoffsäuren, wie z.B. Chlorwasserstoffsäure und Bromwasserstoffsäure, ferner Phosphorsäure, Salpetersäure und Schwefelsäure.

Die Metallsalz-Komplexe des Azolderivats können in einfacher Weise nach üblichen Verfahren erhalten werden, so z.B. durch Lösen des Metallsalzes in Alkohol, z.B. Ethanol und Hinzufügen zum Azolfungizid. Man kann Metallsalz-Komplaxe in bekannter Weise, z.B. durch Abfiltrieren isolieren und gegebenenfalls durch Umkristallisieren reinigen.

Zur Herstellung von Säureadditionssalzen des Azolderivates kommen vorzugsweise folgende Säuren in Frage: Die Halogenwasserstoffsäuren, wie z.B. Chlorwasserstoffsäure und Bromwasserstoffsäure, insbesondere Chlorwasserstoffsäure, ferner Phosphorsäure, Salpetersäure, Schwefelsäure, mono- und bifunktionelle Carbonsäuren und Hydroxycarbonsäuren, wie z.B. Essigsäure, Propionsäure, 2-Ethylhexansäure, Buttersäure, Mandelsäuro, Oxalsäure, Bernsteinsäure, 2-Hydroxy-ethan-dicarbonsäure, Maleinsäure, Fumarsäure, Weinsäure, Citronensäure, Salicylsäure, Sorbinsäure, Milchsäure sowie Sulfonsäuren, wie z.B. p-Toluolsulfonsäure, p-Decyl-phenylsulfonsäure, p-Dodecyl-phenylsulfonsäure, 1,4-Naphthalindisulfonsäure, Alkansulfansäuren, Benzoesäure und gegebenenfalls substituierte Benzoesäuren.

Die Säureadditions-Salze der Verbindungen können in einfacher Weise nach üblichen Salzbilclungsmethoden, z.B. durch Lösung einer Verbindung in einem geeigneten inerten Lösungsmittel und Hinzufügen der Säure, z.B. Chlorwasserstoffsäure, erhalten werden und in bekannter Weise, z.B. durch Abfiltrieren, isoliert und gegebenenfalls durch Waschen mit einem inerten organischen Lösungsmittel gereinigt werden.

Besonders bevorzugt ist die Verwendung der Verbindung (R*, R*)-α-(4-Chlorphenyl)-α-(1-cyclopropylethyl)2H-1,2,4-triazol-1-ethanol (Cyproconazole).

Weiterer Gegenstand der vorliegenden Anmeldung sind synergistisch wirksame Mischungen enthaltend Cyproconazole des Formel (I) 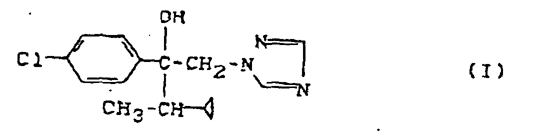 dessen Metallsalze oder Säure additions verbindungen
und eine Kupferverbindung aus der Reihe Kupfernaphthenat, -octoat, -2-ethylhexanoat, -oleat, -phosphat, -benzoat, Cu₂O, CuO, CuSO₄, CuCl₂, Kupferborate, Kupferfluorsilikate, Kupferhydroxycarbonat.

Überraschenderweise zeigen diese Mischungen eine besonders hohe mikrobizide, insbesondere fungizide Wirkung, verbunden mit einem breiten Wirkspektrum gegen im Materialschutz relevante MiKroorganismen; sie sind vor allem wirksam gegen Schimmelpilze, holzverfärbende und holzzerstörende Pilze. Beispielhaft - ohne jedoch zu
limitieren - seien die folgenden Gruppen von Mikroorganismen genannt:
A: Holzverfärbende Pilze:
   A1: Ascomyceten:
      Ceratocystis wie Ceratocystis minor
   A2: Deuteromyceten:
      Aspergillus wie Aspergillus niger
      Aureobasidium wie Aureobasidium pullulans
      Dactylium wie Dactylium fusarioides
      Penicillium wie Penicillium brevicaule oder
      Penicillium variabile
      Sclerophoma wie Sclerophoma pithyophila
      Scopularia wie Scopularia phycomytes
      Trichoderma wie Trichoderma viride oder
      Trichoderma lignorum
   A3: Zygomyceten:
      Mucor wie Mucor spinorus
B: Holzrerstörende Pilze:
   B1: Ascomyceten:
      Chaetomium wie Chaetomium globosum oder
      Chaetomium alba-arenulum
      Humicola wie Humicola grisea
      Petriella wie Petriella setifera
      Trichurus wie Trichurus spiralis
   B2: Basidiomyceten
      Coniophora wie Coniophora puteana
      Coriolus wie Coriolus versicolor
      Donkioporia wie Donkioporia expansa
      Glenospora wie Glenospora graphii
      Gloeophyllum wie Gloeophyilum abietinum oder
      Gloeophyllum adoratum oder G1, protactum oder
      Gloeophyllum sepiarium oder G1, trabaum
      Lentinus wie Lentinus cyathiformes oder
      Lentinus edodes oder Lentinus lepideus oder
      Lentinus grinus oder L. squarrolosus
      Paxillus wie Paxillus panuoides
      Pleurotus wie Pleurotis ostreatus
      Poria wie Poria monticola oder Poria placenta oder Poria vaillantii oder Poria vaporaria
      Serpula wie Serpula himantoides oder Serpula lacrymans
      Stereum wie Stereum hirsutum
      Tyromyces wie Tyromyces palustris
   B3: Deuteromyceten
      Alternaria wie Alternaria tenius
      Cladosporium wie Cladosporium herbarum

Die Menge des eingesetzten Wirkstoffes ist von der Art und dem Vorkommen der mikroorganismen der Keimzahl und von dem Medium abhängig. Die optimale Einsatzmenge kann bei der Anwendung jeweils durch Testreihen ermittelt werden. Im allgemeinen ist es jedoch ausreichend 0,001 bis 20 Gew.-%, vorzugsweise 0,05 bis 10 Gew.-%, des Wirkstoff, bezogen auf das zu schützende Material, einzusalzen.

Der Wirkstoff kann als solcher, in Form von Konzentraten oder allgemein üblichen Formulierungen wie Pulver, Granulate, Lösungen, Suspensionen, Emulsionen oder Fasten angewendet werden.

Die genannten Formulierungen können in an sich bekannter Weise hergestellt werden, z.B. durch Vermischen des Wirkstoffes mit mindestens einem Lösungs- bzw. Verdünnungsmittel, Emulgator, Dispergier- und/oder Binde- oder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Als Losungs- bzw. Verdünnungsmittel kommen organisch-chemische Lösungsmittel oder Lösungsmittelgemische und/oder ein polares organisches Lösungsmittel oder Lösungsmittelgemische und/oder ein öliges bzw. ölartiges organisch-chemisches Lösungsmittel oder Lösungsmittelgemisch und/oder Wasser mit gegebenenfalls einem Emulgator und/oder Netzmittel in Frage. Als übliche schwerflüchtige wasserunlösliche ölige oder Blartige Lösungsmittel werden vorzugsweise die jeweiligen Mineralöle/mineralölhaltige Lösungsmittelgemische oder deren Aromatenfraktionen verwendet. Vorzugsweise seien Testbenzin, Petroleum oder Alkylbenzole genannt, daneben Spindelöl und Monochlornaphthalin. Die Siedebereiche dieser schwerflüchtigen Lösemittel(gemische) überstreichen den Bereich von ca. 170° C bis maximal 350° C.

Die vorbeschriebenen schwerflüchtigen öligen oder ölartigen Lösungsmittel können teilweise durch leichter flüchtige organisch-chemische Lösungsmittel ersetzt werden.

Zur Herstellung eines Holzschutzmittels wird vorzugsweise ein Teil des oben beschriebenen Lösungsmittels oder Lösungsmittelgemisches durch ein polares organisch-chemisches Lösungsmittel oder Lösungsmittelgemisch ersetzt. Vorzugsweise gelangen dabei Lösungsmittel, die Hydroxylgruppen, Estergruppen, Elhergruppen oder Gemische dieser Funktionalität enthalten, zum Einsatz. Beispielhaft seien Ester oder Glykolether genannt. Als Bindemittel werden erfindungsgemäß verstanden wasserverdünnbars bzw. in organisch-chemischen Lösungsmitteln lösliche, dispergier- oder emulgierbare Kunstharze, bindende trocknende Öle, z.B. auf Basis von Aurylharzen, Vinylharzen, Polyesterharzen, Polyurethanharzen, Alkydharzen, Phenolharzen, Kohlenwasserstoffharzen, Silikon harzen. Das benutzte Bindemittel Kann als Lösung, Emulsion oder Dispersion eingesetzt werden. Vorzugsweise werden Gemische aus Alkydharzen und trockendem pflanzlichen Öl verwendet. Besonders bevorzugt sind Alkydharze mit einem Ölanteil zwischen 45 und 70 %.

Das erwähnte Bindemittel kann ganz oder teilweise durch ein Fixierungsmittel (gemisch) oder ein Weichmacher (gemisch) ersetzt werden. Diese Zusätze sollen einer Verflüchtigung der Wirkstoffe sowie einer Kristallisation bzw. Ausfällen vorbeugen. Vorzugsweise ersetzen sie 0,01 bis 30 % des Bindemittels (bezogen auf 100 % des eingesetzten Bindemittels).

Die Weichmacher stammen aus den chemischen Klassen der Phthalsäureester wie Dibutyl-, Dioctyl- oder Benzylbutylphthalat, Phosphorsäureester wie Tributylphosphat, Adipinsäureester wie Di-(2-ethylhexyl)-adipat, Stearate wie Butylstearat und Amylstearat, Oleate wie Butyloleat, Glycerinether oder höhermolekulare Glykolether, Glycerinester sowie p-Toluolsulfonsäureester.

Fixierangsmiltel basieren chemisch auf Polyvinylalkylethern wie z.B. Polyvinylmethylether oder Ketonen wie Benzophenon, Ethylenbenzophenon.

Als Lösungs- bzw. Verdünnungsmittel kommt vorzugsweise Wasser in Frage, gegebenenfalls in Mischung mit einem oder mehreren der obengenannten Lösungs- bzw. Verdünnungsmittel, Emulgatoren und Dispergatoren.

Technische Materialien sind erfindungsgemäß nicht lebende Materialien, die für die Verwendung in der Technik zubereitet worden sind. Beispielsweise können technische Materialien, die durch den Wirkstoff vor mikrobieller Veränderung oder Zerstörung geschützt werden sollen, Klebstoffe, Leime, Papiere und Karton, Textilien, Leder, Holz, Anstrichmittel und Kunststoffartikel, Kühlschmierstoffe und andere Materialien sein, die von Mikroorganismen befallen oder zersetzt werden können. Im Rahmen der zu schützenden Materialien seien auch Teile von Produkttionsanlagen, beispielsweise Kühlwasserkreisläufe, genannt, die durch Vermehrung von Mikroorganismen beeinträchtigt werden können. Bevorzugte technische Materialien im Sinne der Erfindung sind Klebstoffe, Leime, Papiere und Kartone, Leder, Holz, Holzwerkstoffe, Anstrichmittel, Kühlschmiermittel, wäßrige Hydraulikflüssigkeiten und Kühlkreisläufe.

Die erfindungsgemäßen Mischungen bzw. diese enthaltende Mittel bzw. Konzentrate werden vorzugsweise zum Schutz von Holz und Holzwerkstoffen gegen Mikroorganismen, z.B. gegen holzzorslörende oder holzverfärbende Pilze, insbesondere im tropischen Holzschutz eingesetzt.

Unter Holz, welches durch den Wirkstoff der Formel (I) bzw. diesen enthaltende Mischungen geschützt werden kann, ist beispielshaft zu verstehen: Bauholz, Holzbalken, Eisenbahnschwellen, Brückenteile, Bootsstege, Holzfahrzeuge, Kisten, Paletten, Container, Telefonmasten, Holzzäune. Holzverkleidungen, Holzfenster und -türen, Sperrholz, Spanplatten, Tischlerarbeiten oder Holzprodukte, die ganz allgemein beim Hausbau oder in der Bautischlerei Verwendung finden.

Ein besonders erfektiver Holzschutz wird durch großtechnische Imprägnierverfahren, z.B. vakuum, Doppelvakuum oder Druckverfahren, erzielt.

Die erfindungsgemäßen Mischungen mit mindestens einem weiteren antimikrobiell wirksamen Stoff, Fungizid und insbesondere mit anderen Wirkstoffen zur Vergrößerung des Wirkspektrums oder Erzielung besonderer Effekte, wie z.B. dem zusätzlichen Schutz vor Insekten, gemischt. In vielen Fällen erhält man dabei synergistische Effekt, daß heißt, die wirksamkeit der Mischung ist größer als die wirksamkeit der Einzelkomponenten, Besonders bevorzugte Mischungspartner sind z.B. die folgenden Verbindungen:
Sulfenamide- wie Dichlofluanid, Tolylfluanid, Folpet, Fluorfolpet;
Benzimidazole wie Carbendazim, Benomyl, Fuberidazole, Thiabendazole oder deren Salze;
Thiocyanate wie Thioyanatomethylthiobenzothiazol, Methylenbisthiocyanat;
quartäre Ammoniumverbindungen wie Benzyldimethyltetradecylammoniumchlorid, Benzyldimethyldodecylammoniumchlorid, Didecyldimethylammoniumchlorid;
Morpholinderivate wie Tridemorph, Fenpropimorph, Falimorph;
Azole wie Triadimefon, Triadimenol, Bitertanol, Tebuconazole, Propiconazole, Azacanazole, Hexaconazole, Prochloraz, Bromuconazole, Metconazole, Penconazole, Difenoconazole, Fenbendazole, Opus, Fensilazole;
2-(1-Chlorcyclopropyl)-1-(2-chlorphenyl)-3-(1,2,4-triazol-1-yl)-propan-Z-ol;
Iodderivate wie Diiodmethyl-p-tolylsulfon, 3-Iod-2-propinyl-alkohol, 4-Chlorphenyl-3-iodpropargylformal, 3-Brom-2,3-diiod-2-propenylethylcarbonat, 2,3,3-Triiodallylalykohol, 3-Brom-2,3-diiod-2-propenylalkonol, 3-Iod-2-propinyl-n-butylcarbamat, 3-Iod-2-propinyl-n-hexylcarbamat, 3-Iod-2-propinyl-cyclohexylcarbamat, 3-Iod-2-propinyl-phenylcarbamat, O-1-(6-Iodo-3-oxo-hex-5-inyl)butylcarbamat, O-1-(6-Iodo-3-oxo-hex-5-inyl)phenylcarbamat, Napcocide;
Phenolderivate wie Tribromphenol, Tetrachlorphenol, 3-Methyl-4-chlorphenol, Dichlorophen, O-Phenylphenol, m-Phenylphenol, p-Phenylphenol, 2-Benzyl-4-chlorphenol;
Bromderivate wie 2-Brom-2-nilro-1,3-propandiol, 2-Brom-2-brommethyl-glutardinitril;
Isothiazolinone wie N-Methylisothiazolin-3-on, 5-Chloro-N-methyl-isothiazolin-3-on, 4,5-Dichloro-N-octylisothiazolin-3-on, N-Octyl-isothiazolin-3-on;
Benzisothiazolinone wie 4,5-Trimethylen-N-methylisothiazol-3-on;
Pyridine wie 1-Hydroxy-2-pyridinthion (und ihre Na-, Fe-, Mn-, Zn-Salze), Tetrachler-4-methylsulfonylpyridin;
Metallseifen wie Zinn-; Kupfer-, Zinknaphthenat, -octoat, -2-ethylhexanoat, -oleat, -phosphat, -benzoat;
Metallsalze und -oxide wie Tributylzinnoxid, ZnO, Natriumdichromat, Kaliumdichromat;
Dialkyldithiocarbamate wie Na- und Zn-Salze von Dialkyldithiocarbamaten, Tetramethylthiuramdisulfid;
Nitrile wie 2,4,5,6-Tetrachlorisophthalodinitril;
Benzthiazole wie 2-Mercaptobenzothiazol;
Chinoline wie 8-Hydroxychinolin und deren Cu-Salze;
Borverbindungen wie Borsäure, Borsäureester, Borax;
Formaldehyd und Formaldehydabspaltende Verbindungen wie Benzylalkoholmono(poly)-hemiformal, Oxazolidine, Hexahydro-5-triazine, N-Methylolchloracetamid, Paraformaldehyd;
Tris-N-(cyclohexyldiazeniumdioxy)-aluminium, N-(Cyclohexyldiazeniumdioxy)-tributylzinn bzw. K-Salze, Bis-N-(cyclohexyldiazeniumdioxy)-kupfer.

Als Insektizide werden bevorzugt zugesetzt:
Phosphorsäureester wie Azinphos-ethyl, Azinphos-methyl, 1-(4-Chlorphenyl)-4-(O-ethyl,S-propyl)phosphoryloxy-pyrazol, Chlorpyrifos, Coumaphos, Demeton, Demeton-S-methyl, Diazinon, Dichlorvos, Dimethoate, Ethoprophos, Etrimfos, Fenitrothion, Fenthion, Heptenophos, Parathion, Parathion-methyl, Phosalone, Phoxim, Pirimiphos-ethyl, Pirimiphos-methyl, Profenofos, Prothiofos, Sulfprofos, Triazophos und Trichloron;
Carbamate wie Aldicarb, Bendiocarb, 2-(1-Methylpropyl)-phenylmethylcarbamat, Butocarboxim, Butoxycarboxim, Carbaryl, Carbofuran, Carbosulfan, Cloethocarb, Isoprocarb, Methomyl, Oxamyl, Pirimicarb, Promecarb, Propoxur und Thiodicarb;
Organosiliciumverbindungen, vorzugsweise Dimethyl(phenyl)silyl-methyl-3-phenoxybenzylether wie Dimethyl(4-ethoxyphenyl)-silylmethyl-3-phenoxybenzylether oder (Dimethylphenyl)-silyl-methyl-2-phenoxy-6-pyridylmethylether wie z.B. Dimethyl(9-ethoxy-phenyl)-silylmethyl-2-phenoxy-6-pyridylmethylether oder [(Phenyl)-3-(3-phenoxyphenyl)-propyl)(dimethyl)-silane wie z.B. (4-Ethoxyphenyl)-[3-(4-fluoro-3-phonoxyphenyl-propyl]dimethylsilan.
Pyrethroide wie Allethrin, Alphamethrin, Bioresmethrin, Byfenthrin, Cycloprothrin, Cyfluthrin, Decamethrin, Cyhalothrin, Cypermethrin, Deltamethrin, Alpha-cyano-3-phenyl-2-methylbenzyl-2,2-dimethyl-3-(2-chlor-2-trifluor-methylvinyl)cyclopropancarboxylat, Fenpropathrin, Fenfluthrin, Fenvalerate, Flucythrinate, Flumethrin, Fluvalinate, Permethrin, Resmethrin und Tralomethrin;
Nitroimine und Nitromethylene wie 1-[(6-Chlor-3-pyridinyl)-methyl]-4,5-dihydro-N-nitro-1H-imidazol-2-amin (Imidacloprid), N-[(6-Chlor-3-pyridyl)methyl-]N²⁻cyano-N¹-methylacetamid.

Die auf diese Weise hergestellten erfindungsgemäßen Mischungen, Konzentrate und Formulierungen zeigen Wirksamkeit nicht nur gegen die vorgenannten Pilze sondern auch gegen materialzerstörende Insekten, falls ein InseKtizid zugegen ist. Beispielhaft - ohne zu limitieren - seien als materialzerstörende Insekten genannt :
A: Hautflügler:
   Sirex juvencus
   Urocerus augur
   Urocerus gigas
   Urucerus gigas taignus
B: Käfer:
   Anobium punctatum
   Apate monachus
   Bostrychus capucins
   Chlorophores pilosus
   Dendrobium pertinex
   Dinoderus minutus
   Ernobius mollis
   Heterobostrychus brunneus
   Hylotrupes bajulus
   Lyctus africanus
   Lyctus brunneus
   Lyctus linearis
   Lyctus planicollis
   Lyctus pubescens
   Minthea rugicollis
   Priobium carpini
   Ptilinus pecticornis
   Sinoxylon spec.
   Trogoxylon aequale
   Trypto dendron spec.
   Xestobium rufovillosum
   Xyleborus spec.
C: Termiten:
   coptolermes formosanus
   Cryptotermes brevis
   Heterotermes indicola
   Kalotermes flavicollis
   Mastotermes darwiniensis
   Reticulitermes flavipes
   Reticulitermes lucifugus
   Reticulitermes santonensis
   Zootermopsis nevadensis

Als andere Wirkstoffe kommen in Betracht Algizide, Molluskizide, Wirkstoffe gegen "sea animals", die sich auf z.B. Schiffsbodenanstrichen ansiedeln.

Besonders bevorzugt sind folgende Abmischpartner:
Dichlofluanid, Tolylfluanid,
Benzyldimethyldodecylammoniumchlorid, Didecyldimethylammoniumchlorid,
Tebuconazole, Propiconazole, Azaconazole, Hexaconazole,
3-Brom-2,3-diiod-2-propenylalkohol, 3-(od-2-propinyl-n-butylcarbamat,
o-Phenylphenol, m-Phenylphenol, p-Phenylphenol, 3-Methyl-4-chlorphenol,
Thiocyanatomethylthiobenzothiazol,
N-Methylisothiazolin-3-on, 5-Chloro-N-methylisothiazolin-3-on, 4,5-Dichloro-N-octylisothiazolin-3-on, N-Octyl-isothiazolin-3-on,
Benzylalkoholmono (poly)-hemiformal, N-Methylolchloracetamid,
Phoxim,
Cyfluthrin, Permethrin, Cypermethrin, Deltamethrin, Imidacloprid.

Die zum Schutz der technischen Materialien verwendeten mikrobiziden Mittel oder Konzentrate enthalten den Wirkstoff der Formel (I) in einer Konzentration von 0,01 bis 95 Cew.-%, insbesondere 0,01 bis 60 Gew.-%, daneben gegebenenfalls 0,001 bis 95 Gew,-% eines oder mehrerer geeigneter weiterer Fungizide, Insektizide oder weitere Wirkstoffe wie oben genannt.

Die erfindungsgemäßen Mittel ermöglichen in vorteilhafter Weise, die bisher verfügbaren mikrobiziden Mittel durch effektivere zu ersetzen. Sie zeigen eine gute Stabilität und haben in vorteilhafter Weise ein breites Wirkungsspektrum.

## Patentansprüche

1. Verwendung einer synergistisch wirksamen Mischung enthaltend Cyproconazole der Formel (I) 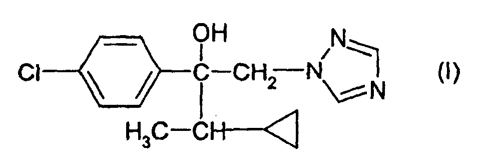 dessen Metallsalze oder Säureadditions verbindungen,
und eine Kupferverbindung aus der Reihe Kupfernaphthenat, -octoat, -2-ethylhexanoat, -oleat, -phosphat, -benzoat, Cu₂O, CuO, CuSO₄, CuCl₂, Kupferborate, Kupferfluorsilikate, Kupferhydroxycarbonat
zum Schutz von technischen Materialien gegen im Materialschutz relevante Mikroorganismen.

2. Synergistisch wirksame Mischung enthaltend Cyproconazole und eine Kupferverbindung aus der Reihe Kupfernaphthenat, -octoat, -2-ethylhexanoat, -oleat, -phosphat, -benzoat, Cu₂O, CuO, CuSO₄, CuCl₂, Kupferborate, Kupferfluorsilikate, Kupferhydroxycarbonat

3. Verfahren zum Schutz von technischen Materialien, **dadurch gekennzeichnet, dass** man die technischen Materialien mit einer Mischung wie in Anspruch 2 definiert, behandelt.

4. Technische Materialien enthaltend eine Mischung wie in Anspruch 2 definiert.

5. Mikrobiozides Mittel enthaltend eine Mischung wie in Anspruch 2 definiert.

## Claims

1. Use of a synergistically active mixture comprising cyproconazole, of the formula (I), 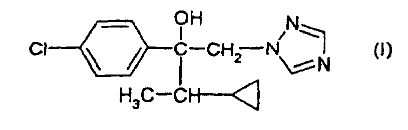 its metal salts or acid addition compounds, and a copper compound from the series consisting of copper naphthenate, copper octoate, copper 2-ethylhexanoate, copper oleate, copper phosphate, copper benzoate, Cu₂O, CuO, CuSO₄, CuCl₂, copper borates, copper fluorosilicates, copper hydroxycarbonate
for protecting industrial materials against microorganisms which are relevant in the protection of materials.

2. Synergistically active mixture comprising cyproconazole and a copper compound from the series consisting of copper naphthenate, copper octoate, copper 2-ethylhexanoate, copper oleate, copper phosphate, copper benzoate, Cu₂O, CuO, CuSO₄, CuCl₂, copper borates, copper fluorosilicates, copper hydroxycarbonate.

3. Method of protecting industrial materials, **characterized in that** the industrial materials are treated with a mixture as defined in Claim 2.

4. Industrial materials comprising a mixture as defined in Claim 2.

5. Microbicidal composition comprising a mixture as defined in Claim 2.

## Revendications

1. Utilisation d'un mélange à action synergique contenant du cyproconazole de formule (I) 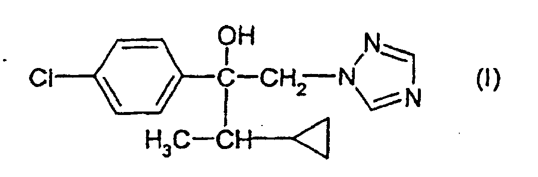 ses sels métalliques ou ses composés d'addition à un acide, et un composé du cuivre parmi le groupe constitué du naphténate de cuivre, de l'octoate de cuivre, du 2-éthylhexanoate de cuivre, de l'oléate de cuivre, du phosphate de cuivre, du benzoate de cuivre, du Cu₂O, du CuO, du CuSO₄, du CuCl₂, de borates de cuivre, de fluorosilicates de cuivre et de l'hydroxycarbonate de cuivre,
pour la protection de matières industrielles contre des mico-organismes importants dans la protection des matières.

2. Mélange à action synergique contenant du cyproconazole et un composé du cuivre parmi le groupe constitué du naphténate de cuivre, de l'octoate de cuivre, du 2-éthylhexanoate de cuivre, de l'oléate de cuivre, du phosphate de cuivre, du benzoate de cuivre, du Cu₂O, du CuO, du CuSO₄, du CuCl₂, de borates de cuivre, de fluorosilicates de cuivre et de l'hydroxycarbonate de cuivre.

3. Procédé de protection de matières industrielles, **caractérisé en ce que** les matières industrielles sont traitées avec un mélange tel que défini dans la revendication 2.

4. Matières industrielles contenant un mélange tel que défini dans la revendication 2.

5. Composition microbicide contenant un mélange tel que défini dans la revendication 2.
